# EUROPEAN PATENT APPLICATION

(11) **EP 1 137 200 A1**
(43) Date of publication of application: **26.09.2001**
(21) Application number: 00113693.6
(22) Date of filing: 21.03.2000
(51) Int. Cl.: H04B 7/26, H04B 7/005

(54) **Method for providing a packet communication service in a CDMA wireless network**

(30) Priority: 22.03.1999 US 273508; 24.03.1999 US 275010; 04.05.1999 US 304345
(62) Divisional of application: 00940005.2
(71) Applicant: Golden Bridge Technology, Inc., West Long Branch, NJ 07764 (US)
(72) Inventor: Kanterakis, Emmanuel, North Brunswick, NJ 08902 (US); Parsa, Kourosh, Riverside, CT 06878 (US)
(74) Representative: Rupprecht, Kay, Dipl.-Ing.

(57) **Abstract**

A method of providing an communication service in a CDMA wireless network according to the invention comprises the steps of broadcasting a frame-timing signal from a CDMA base station over a common synchronization channel modulated with a common chip-sequence signal, selectively authorizing remote CDMA stations to use a common packet channel for packet transmissions to the CDMA base station, several steps of receiving and transmitting power control signals over the common packet channel between the remote CDMA stations and the CDMA base station, transmitting packet data and-control signals from the remote stations to the base station based on received power control signals, and transmitting signals over a downlink channel for authorized remote station at power levels based on received power control signals.

## Description

A general object of the invention is an efficient method for packet data transfer on CDMA systems.

Another object of the invention is high data throughput and low delay, and efficient power control.

According to the present invention, as embodied and broadly described herein, an improvement to a code-division-multiple-access (CDMA) system employing spread-spectrum modulation, is provided. The CDMA system has a base station (BS) and a plurality of remote stations. The base station has BS-spread-spectrum transmitter and a BS-spread-spectrum receiver. Each of the plurality of remote stations has an RS-spread-spectrum transmitter and an RS-spread-spectrum receiver.

A method of providing an communication service in a CDMA wireless network according to the invention comprises the steps of broadcasting a frame-timing signal from a CDMA base station over a common synchronization channel modulated with a common chip-sequence signal, selectively authorizing remote CDMA stations to use a common packet channel for packet transmissions to the CDMA base station, several steps of receiving and transmitting power control signals over the common packet channel between the remote CDMA stations and the CDMA base station, transmitting packet data and control signals from the remote stations to the base station based on received power control signals, and transmitting signals over a downlink channel for authorized remote station at power levels based on receives power control signals.

Furthermore, a CDMA base station in accordance with the invention receives over the common packet channel from a remote station a detectable access burst, sends a coded acknowledgement signal over a control channel, received power control signals and data over the common packet channel and transmits signals intended for the remote station at power levels based on the received power control signals.

Furthermore, a CDMA mobile station in accordance with the invention receives a frame-timing signal from a CDMA base station, determines frame timing from the received frame-timing signal, transmits an access burst signal over the common packet channel, receives an acknowledgement signal from the base station, receives power control signals and data from the base station and transmits power control signals and packet data to the base station over the common packet channel at power levels based on the received power control signals. The base station also transmit power control signals as the power control are MUTUAL... In order words, the BS and the RS are constantly controlling each other's power once a link (acknowledgement) is set up.

Furthermore, according to the invention a method of transferring data for one of a plurality of wireless remote station handsets through a base station comprises the steps of claim 16 and a method of providing a packet communication service in a CDMA wireless network comprises the steps of claim 23 or 25, respectively.

In the method of transferring data for one of a plurality of wireless remote station handsets through a base station it is important that from a base station spread-spectrum transmitter signals comprising power control information are transmitted to a remote station spread-spectrum receiver at power levels determined in part in response to receive power control information. Furthermore, it is important that from the remote station transmitter to the base station receiver data are transmitted at power levels determined in part in response to the received power control information.

In the method of providing a packet communication service in a CDMA network, it is important that power control signals are received over the common packet channel from one authorized remote CDMA station, at the CDMA base station, and that power control signals intended for the one authorized remote CDMA station are transmitted from the base station at a power level based on the received power control signals.

## Claims

1. A method of providing a packet communication service in a code-division-multiple-access (CDMA) wireless network, comprising:
broadcasting a frame-timing signal from a CDMA base station of the network, over a common synchronization channel modulated with a common chip-sequence signal;
selectively authorizing remote CDMA stations to use a Common Packet Channel for packet transmissions to the CDMA base station, on a slotted-aloha basis, in a predetermined relationship to the frame-timing signal;
receiving power control signals over the Common Packet Channel from each respective one of the authorized remote CDMA stations, at the CDMA base station;
receiving power control signals from the CDMA base station at each respective one of the authorized remote CDMA stations;
transmitting power control signals over the Common Packet Channel to the respective authorized remote CDMA stations, from the CDMA base station, at power levels based on the received power control signals;
transmitting power control signals over the Common Packet Channel to the CDMA base station, from the respective authorized remote CDMA stations at power levels based on received power control signals;
transmitting packet data and control signals from the respective authorized remote CDMA stations over the Common Packet Channel to the CDMA base station based on received power control signals; and
transmitting signals over a downlink channel intended for respective authorized remote CDMA stations at power levels based on received power control signals.

2. A method as in claim 1, wherein the step of transmitting signals over a downlink channel comprises transmitting data and power control signals intended for each respective authorized remote CDMA station over the downlink channel.

3. A method as in claim 1 or 2, wherein the step of selectively authorizing comprises:
receiving preamble codes from respective remote CDMA stations; and
in response, transmitting back acknowledgement signals, each acknowledgment signal comprising a code corresponding to a respective one of the preamble codes.

4. A method as in one of claims 1 to 3, wherein the step of receiving power control signals at the CDMA base station occurs after the reception of a respective preamble from the one authorized remote CDMA station.

5. A method as in one of claims 1 to 4, wherein the step of receiving power control signals at each respective one of the remote CDMA stations occurs after the reception of an acknowledgement signal from the CDMA base station.

6. A method as in one of claims 1 to 4, wherein reception of packet data from a specific one authorized remote CDMA station comprises:
receiving over the common packet channel a selected collision detection code from the specific remote CDMA station;
in response to receipt of the selected collision detection code, transmitting back a corresponding collision detection code; and
subsequently receiving data and control signals over the common packet channel from the specific remote CDMA station.

7. A code-division-multiple-access (CDMA) wireless base station, the base station being assigned a set of possible coded preamble signals for use in CDMA communications the CDMA base station comprising:
a CDMA transmitter;
a CDMA receiver; and
a controller coupled to the CDMA receiver for responding to certain received signals and coupled for control of the CDMA transmitter, such that in operation the CDMA base station:
receives over a Common Packet Channel from a remote station a detectable access burst comprising one of the possible coded preamble signals assigned to the base station selected by the remote station;
sends a coded acknowledgement signal over a control channel, the coded acknowledgement signal corresponding to the received coded preamble signal;
receives power control signals and data, over the Common Packet Channel, from the remote station; and
transmits signals intended for the remote station at power levels based on the received power control signals.

8. A CDMA base station as in claim 7, wherein:
the reception of data over the Common Packet Channel from the remote station comprises receiving a coded collision detection signal;
upon receipt of the coded collision detection signal, the controller causes the CDMA base station to transmit back over the control channel a corresponding coded collision detection signal; and
the reception of data over the Common Packet Channel from the remote station further comprises receiving the data after transmission of the corresponding coded collision detection signal.

9. A CDMA base station as in claim 7 or 8, wherein the controller causes the CDMA transmitter to broadcast a frame-timing signal over a common synchronization channel modulated with a common chip-sequence signal.

10. A CDMA base station as in claim 9, wherein the CDMA receiver receives the access burst in one of a plurality of access slots defined in relation to the frame-timing signal.

11. A CDMA base station as in one of claims 7 to 10, wherein:
the reception of a detectable access burst comprises receiving one or more coded preamble signals that may be transmitted at sequentially increasing discrete power levels;
the controller causes the CDMA transmitter to transmit the acknowledgement signal in response to a first coded preamble signal that is received at an adequate power level;
the reception of power control signals follows the reception of the detectable access burst.

12. A code-division-multiple-access (CDMA) wireless mobile station, comprising:
a CDMA transmitter;
a CDMA receiver; and
a controller coupled to the CDMA receiver for responding to certain received signals and coupled for controlling the CDMA transmitter, such that in operation the wireless mobile station:
receives a frame-timing signal from a CDMA base station over a broadcast common-synchronization channel having a common chip-sequence signal;
determines frame timing from the received frame-timing signal;
transmits an access burst signal over a Common Packet Channel, in a time slot selected from a plurality of time slots having predefined relationships to the determined frame timing;
receives an acknowledgement signal corresponding to the access burst signal, from the CDMA base station;
receives power control signals and data from the CDMA base station; and
transmits power control signals and packet data to the CDMA base station over the Common Packet Channel at power levels based on the received power control signals,
wherein at least the transmission of the packet data is responsive to receipt of the acknowledgement signal.

13. A CDMA wireless mobile station as in claim 12, wherein the controller causes the CDMA transmitter to transmit the power control signals to the CDMA base station, prior to the transmission of the packet data.

14. A CDMA wireless mobile station as in claim 13, wherein the controller causes the CDMA transmitter to transmit power control signals after a coded preamble signal within the access burst signal.

15. A CDMA wireless mobile station as in one of claims 12 to 14, wherein the controller causes the CDMA transmitter to transmit a selected collision detection code following receipt of the acknowledgement signal and initiates transmission of at least the packet data in response to receipt of a collision detection code from the CDMA base station that corresponds to the selected collision detection code.

16. A method of transferring data for one a plurality of wireless remote station (RS) handsets through a base station (BS) of a wireless telecommunication network, the base station comprising a BS-spread-spectrum transmitter and a BS-spread-spectrum receiver, the method comprising the steps of:
transmitting a frame-timing signal from said BS-spread-spectrum transmitter over a broadcast common-synchronization channel having a common chip-sequence signal;
receiving the broadcast common-synchronization channel comprising a frame timing signal at an RS-spread-spectrum receiver of the one RS handset;
determining frame timing at an RS-spread-spectrum receiver of the one RS handset from the received frame-timing signal;
transmitting one or more segments of an access-burst signal from an RS-spread-spectrum transmitter of the one RS handset, wherein timing of the one or more segments is based on the determined frame timing;
transmitting a spread-spectrum signal comprising power control information and packet data from said RS-spread-spectrum transmitter;
receiving the spread-spectrum signal comprising power control information and packet data at said BS-spread-spectrum receiver;
receiving at least one segment of the access-burst signal at said BS spread-spectrum receiver;
transmitting an acknowledgment from said BS-spread-spectrum transmitter, in response to the receipt of the at least one segment of the access-burst signal;
receiving the acknowledgment at said RS-spread-spectrum receiver;
transmitting a spread-spectrum signal comprising power control information from said BS-spread-spectrum transmitter, after transmitting the acknowledgment;
receiving the spread-spectrum signal comprising power control information at' said RS-spread-spectrum receiver;
transmitting from said BS-spread-spectrum transmitter, signals comprising power control information, to said RS-spread-spectrum receiver at power levels determined in part in response to received power control information;
transmitting data from said RS-spread-spectrum transmitter, to said BS-spread-spectrum receiver at power levels determined in part in response to the received power control information; and
forwarding the received data from said base station to another network element.

17. The method as set forth in claim 16, wherein at least the transmission of the packet data from said RS-spread-spectrum transmitter is responsive to the reception of the acknowledgement at said RS-spread-spectrum receiver.

18. The method as set forth in claim 17, wherein transmission of the power control signals from the RS-spread-spectrum transmitter follows the transmission of a segment of an access burst signal.

19. The method as set forth in one of claims 16 to 18, wherein:
the step of transmitting the access-burst signal comprises transmitting a plurality of segments at a plurality of respective power levels; and
the step of receiving at least one segment comprises receiving at least one segment at a detectable power level.

20. The method as set forth in claim 19, wherein the step of transmitting the access-burst signal comprises transmitting the segments at sequentially increasing power levels.

21. The method as set forth in one of claims 16 to 20, wherein each segment comprises a selected one of a plurality of preamble codes, and the acknowledgement comprises a coded signal corresponding to the selected preamble code.

22. The method as set forth in one of claims 16 to 21, further comprising:
transmitting a selected one of a plurality of collision-detection (CD) codes by said RS-spread-spectrum transmitter, in response to receipt of the acknowledgment;
if the BS-spread-spectrum receiver detects the selected CD code from the RS-spread-spectrum transmitter, transmitting a corresponding BS-CD code from said BS-spread-spectrum transmitter; and
if the RS-spread-spectrum receiver detects the corresponding BS-CD code, transmitting at least data to said base station, from said RS-spread-spectrum transmitter.

23. A method of providing a packet communication service in a code-division-multiple-access (CDMA) wireless network, comprising:
broadcasting a frame-timing signal from a CDMA base station of the network, over a common synchronization channel modulated with a common chip-sequence signal;
selectively authorizing one of a plurality of remote CDMA stations to use a Common Packet Channel for packet transmissions to the CDMA base station, on a slotted-aloha basis, in a predetermined relationship to the frame-timing signal;
receiving power control signals over the Common Packet Channel from the one authorized remote CDMA station, at the CDMA base station;
transmitting power control signals intended for the one authorized remote CDMA station, from the CDMA base station, at a power level based on the received power control signals; and
receiving packet data from the one authorized remote CDMA station over the Common Packet Channel at the CDMA base station.

24. A method as in claim 23, further comprising transmitting additional signals intended for the one authorized remote CDMA station at power levels based on the received power control signals.

25. A method of providing a packet communication service in a code-division-multiple-access (CDMA) wireless network, comprising:
broadcasting a frame-timing signal from a CDMA base station of the network, over a common synchronization channel modulated with a common chip-sequence signal;
selectively authorizing remote CDMA stations to use a Common Packet Channel for packet transmissions to the CDMA base station, on a slotted-aloha basis, in a predetermined relationship to the frame-timing signal;
receiving power control signals over the Common Packet Channel from respective ones of the authorized remote CDMA stations, at the CDMA base station;
transmitting power control signals intended for the respective remote CDMA stations, from the CDMA base station, at power levels based on power control signals received from the respective remote CDMA stations; and
receiving packet data from the respective remote CDMA stations over the Common Packet Channel at the CDMA base station.

26. A method as in claim 25, further comprising transmitting additional signals intended for the respective remote CDMA stations at power levels based on the power control signals received from the respective remote CDMA stations.
